(19) Europäisches Patentamt
European Patent Office
Office européen des brevets

(11) **EP 3 598 325 A1**

(12) **EUROPEAN PATENT APPLICATION**
published in accordance with Art. 153(4) EPC

(43) Date of publication:
**22.01.2020 Bulletin 2020/04**

(51) Int Cl.:
**G06F 17/50** *(2006.01)*    **G06F 17/10** *(2006.01)*

(21) Application number: **18852982.0**

(22) Date of filing: **09.08.2018**

(86) International application number:
**PCT/KR2018/009120**

(87) International publication number:
**WO 2019/050176 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2017 KR 20170114602**

(71) Applicant: **LG Chem, Ltd.**
**Seoul 07336 (KR)**

(72) Inventors:
• **KONG, Jin-Hak**
  **Daejeon 34122 (KR)**
• **KIM, Dong-Yeon**
  **Daejeon 34122 (KR)**
• **LEE, Su-Hang**
  **Daejeon 34122 (KR)**
• **CHOI, Yong-Seok**
  **Daejeon 34122 (KR)**

(74) Representative: **Plasseraud IP**
**66, rue de la Chaussée d'Antin**
**75440 Paris Cedex 09 (FR)**

(54) **STRUCTURAL ANALYSIS TOOL FOR MONO FRAME AND METHOD FOR DESIGNING MONO FRAME**

(57)    Disclosed is a structural analysis tool for a mono-frame that is provided in a rectangular tube form as a structure for protecting battery cells, which includes an input unit configured to input dimension, weight and stress value data of a reference mono-frame, which are structurally analyzed in advance, and dimension and weight data of a provisionally designed mono-frame; a calculation unit configured to calculate a stress ratio of the reference mono-frame and the provisionally designed mono-frame based on the beam theory by using the data of the reference mono-frame and the data of the provisionally designed mono-frame; and an output unit configured to judge stability of the provisionally designed mono-frame by comparing the stress ratio calculated by the calculation unit with a preset stress ratio reference value. There is also disclosed a mono-frame designing method using the structural analysis tool.

FIG. 4

**Description**

TECHNICAL FIELD

The present disclosure relates to a structural analysis tool for a mono-frame of a battery module and a mono-frame designing method, and more particularly, to a structural analysis tool for a mono-frame, which may reduce cost and time required for evaluating structural stability of a mono-frame at an initial battery module designing stage, and a mono-frame designing method using the tool.

The present application claims priority to Korean Patent Application No. 10-2017-0114602 filed on September 7, 2017 in the Republic of Korea, the disclosures of which are incorporated herein by reference.

BACKGROUND ART

Generally, a battery module is formed in a structure in which a plurality of battery cells are assembled by means of serial and/or parallel connections. The battery module typically includes a cell assembly in which a plurality of battery cells are stacked in one direction, an outer frame capable of surrounding the cell assembly, and a sensing assembly for sensing electrical characteristics of the battery cells.

The outer frame may be classified into a multiple-frame fabricated so that a plurality of plates may be assembled to each other in a snap-fit or bolting manner, and a mono-frame fabricated in an integrated form. The mono-frame may be fabricated in an integrated form by extrusion or die casting. The mono-frame has advantages over the multiple-frame in terms of process and quality management since it is convenient to accommodate the battery cells and assemble with other components, as disclosed in KR 10-2017-0083834 (published on July 19, 2017). As a result, the mono-frame is recently being applied as an outer frame of a battery module more and more.

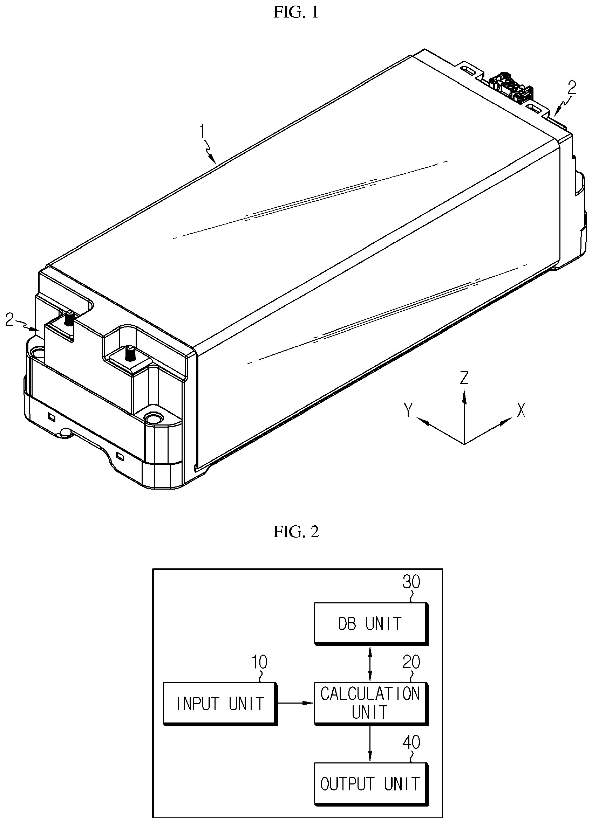

FIG. 1 is a perspective view schematically showing a battery module to which a mono-frame is applied.

Referring to FIG. 1, a mono-frame 1 is provided as a rectangular tube with a hollow, and a sensing assembly 2 is assembled to both ends of the mono-frame 1 in a state where battery cells are accommodated in the inner space of the mono-frame 1. Thus, both ends of the mono-frame 1 may be covered and supported by the sensing assembly 2.

Meanwhile, the mono-frame 1 should secure sufficient rigidity since it is a structure that provides a mechanical support to the battery module and surrounds the cell assembly to protect the cell assembly from external shocks.

Thus, the structural stability of the mono-frame should be essentially evaluated at an initial battery module designing stage. The structural stability of this mono-frame is evaluated based on the analytical verification using the finite element analysis. The finite element analysis is a good evaluation tool capable of replacing the experimental verification of an actual model because it may yield reliable results.

However, the structural analysis by means of the finite element analysis has a problem that the analysis takes an excessive time in modeling the mono-frame and providing load and boundary conditions and also the method of using the finite element analysis program and its process are complicated.

For example, in the conventional mono-frame designing process, it takes one or two weeks to perform the initial mono-frame structure analysis, and if there is a problem in the stability as a result of the analysis, it takes one or two weeks to make an additional design and then analyzing its structure and reviewing the analysis result. As a result, it takes at least two to four weeks to completely design the concept of the mono-frame.

If structural robustness is checked through the above structural analysis in the initial designing stage, a large level of design change may be minimized later, but the lead time is too long. In order to solve the lead time problem, a new alternative is needed to evaluate the structural robustness of initial designs of the mono-frame at low time and low cost.

DISCLOSURE

Technical Problem

The present disclosure is designed to solve the problems of the related art, and therefore the present disclosure is directed to providing a structural analysis tool for a mono-frame, which may check structural robustness of a mono-frame at an initial battery module designing stage at low time and low cost, and a mono-frame designing method using the tool.

However, the objects of the present disclosure are not limited to the above, and objects not mentioned herein may be clearly understood from the present specification by those skilled in the art.

Technical Solution

In one aspect of the present disclosure, there is provided a structural analysis tool for a mono-frame that is provided in a rectangular tube form as a structure for protecting battery cells, the structural analysis tool comprising: an input unit configured to input dimension, weight and stress value data of a reference mono-frame, which are structurally analyzed in advance, and dimension and weight data of a provisionally designed mono-frame; a calculation unit configured to calculate a stress ratio of the reference mono-frame and the provisionally designed mono-frame based on the beam theory by using the data of the reference mono-frame and the data of the provisionally designed mono-frame; and an output unit configured to judge stability of the provisionally designed mono-frame by comparing the stress ratio calculated by the calculation unit with a preset stress ratio reference value.

The preset stress ratio reference value may be 1, and the output unit may output stability conformity judgment when the stress ratio calculated by the calculation unit is equal to or smaller than the preset stress ratio reference value, and output stability nonconformity judgment when the stress ratio calculated by the calculation unit is greater than the preset stress ratio reference value.

The calculation unit may calculate the stress ratio by using the following equation:

$$R = \frac{(q_2 L_2^2 H_2)[W_1 H_1^3 - (W_1 - 2 a_1)(H_1 - 2 b_1)^3]}{(q_1 L_1^2 H_1)[W_2 H_2^3 - (W_2 - 2 a_2)(H_2 - 2 b_2)^3]}$$

where R: a stress ratio, q1: a distributed load of the reference mono-frame, HI: a height of the reference mono-frame, L1: a length of the reference mono-frame, W1: a width of the reference mono-frame, a1: a thickness of a side plate of the reference mono-frame, b1: a thickness of an upper plate of the reference mono-frame, q2: a distributed load of the provisionally designed mono-frame, H2: a height of the provisionally designed mono-frame, L2: a length of the provisionally designed mono-frame, W2: a width of the provisionally designed mono-frame, a2: a thickness of a side plate of the provisionally designed mono-frame, b2: a thickness of an upper plate of the provisionally designed mono-frame.

In addition, the calculation unit may further calculate a stress value of the provisionally designed mono-frame by using the following equation:

$$\sigma_2 = \sigma_1 R$$

where $\sigma_1$: a stress value of the reference mono-frame analyzed in advance by the finite element analysis, $\sigma_2$: a stress value of the provisionally designed mono-frame, R: a stress ratio.

In addition, the calculation unit may further calculate a strain ratio of the provisionally designed mono-frame by using the following equation:

$$D_2 = D_1 \frac{(q_2 L_2^4)(E_1 I_1)}{(q_1 L_1^4)(E_2 I_2)}$$

where D1: a strain of the reference mono-frame analyzed in advance by the finite element analysis, D2: a strain of the provisionally designed mono-frame, E1: a Young's modulus of the reference mono-frame, E2: a Young's modulus of the provisionally designed mono-frame, 11: a moment of inertia of the reference mono-frame, 12: a moment of inertia of the provisionally designed mono-frame.

In another aspect of the present disclosure, there is also provided a mono-frame designing method for designing a mono-frame that is provided in a rectangular tube form as a structure for protecting battery cells, the method comprising: a mono-frame concept provisional design step of determining dimension and weight of a mono-frame; a calculation step of calculate a stress ratio of a reference mono-frame and the provisionally designed mono-frame based on the beam theory by using dimension, weight and stress value data of the reference mono-frame, which are structurally analyzed in advance, and dimension and weight data of the provisionally designed mono-frame; and a stability judgment step of judging stability of the provisionally designed mono-frame by comparing the stress ratio calculated in the calculation step with a preset stress ratio reference value.

The preset stress ratio reference value may be 1, and in the stability judgment step, stability conformity judgment may be made when the stress ratio calculated in the calculation step is equal to or smaller than the preset stress ratio reference value, and stability nonconformity judgment may be made when the stress ratio calculated in the calculation step is greater than the preset stress ratio reference value.

The mono-frame designing method may further comprise an additional setting step of selectively adjusting at least one of the dimensions of the provisionally designed mono-frame when the stability nonconformity judgment is made in the stability judgment step, wherein the calculation step may be performed again after the additional setting step.

The additional setting step may include a dimension adjusting step in which at least one thickness among the thicknesses of the upper plate and the thicknesses of the side plate of the provisionally designed mono-frame is adjusted to be thicker than before.

The stress ratio may be calculated according to the following equation:

$$R = \frac{(q_2 L_2^2 H_2)[W_1 H_1^3 - (W_1 - 2a_1)(H_1 - 2b_1)^3]}{(q_1 L_1^2 H_1)[W_2 H_2^3 - (W_2 - 2a_2)(H_2 - 2b_2)^3]}$$

where R: a stress ratio, q1: a distributed load of the reference mono-frame, HI: a height of the reference mono-frame, L1: a length of the reference mono-frame, W1: a width of the reference mono-frame, a1: a thickness of a side plate of the reference mono-frame, b1: a thickness of an upper plate of the reference mono-frame, q2: a distributed load of the provisionally designed mono-frame, H2: a height of the provisionally designed mono-frame, L2: a length of the provisionally designed mono-frame, W2: a width of the provisionally designed mono-frame, a2: a thickness of a side plate of the provisionally designed mono-frame, b2: a thickness of an upper plate of the provisionally designed mono-frame.

In the calculation step, a stress value of the provisionally designed mono-frame may be further calculated by using the stress ratio as in the following equation:

$$\sigma_2 = \sigma_1 R$$

where $\sigma 1$: a stress value of the reference mono-frame analyzed in advance by the finite element analysis, $\sigma 2$: a stress value of the provisionally designed mono-frame, R: a stress ratio.

In the calculation step, a strain of the provisionally designed mono-frame may be further calculated by using the following equation:

$$D_2 = D_1 \frac{(q_2 L_2^4)(E_1 I_1)}{(q_1 L_1^4)(E_2 I_2)}$$

where D1: a strain of the reference mono-frame analyzed in advance by the finite element analysis, D2: a strain of the provisionally designed mono-frame, E1: a Young's modulus of the reference mono-frame, E2: a Young's modulus of the provisionally designed mono-frame, 11: a moment of inertia of the reference mono-frame, 12: a moment of inertia of the provisionally designed mono-frame.

Advantageous Effects

According to an embodiment of the present disclosure, it is possible to provide a structural analysis tool for a mono-frame, which may check structural robustness of a mono-frame at an initial battery module designing stage at low time and low cost, and a mono-frame designing method using the tool.

The structural stability of various mono-frame designs may be evaluated by simply calculating a stress ratio for a reference mono-frame of a similar structure that has been previously analyzed and then comparing it with the beam theory. Thus, the lead time at initial battery module designing stage may be significantly reduced.

The effects of the present disclosure are not limited to the above, and effects not mentioned herein may be clearly understood from the present specification and the accompanying drawings by those skilled in the art.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a perspective view schematically showing a battery module to which a mono-frame is applied.
FIG. 2 is a block diagram showing a structural analysis tool for a mono-frame according to an embodiment of the present disclosure.

FIGS. 3 to 6 are reference views for illustrating a method for judging stability of the mono-frame by using the structural analysis tool for a mono-frame of FIG. 2.

FIG. 7 is a flowchart for illustrating processes of a mono-frame designing method according to an embodiment of the present disclosure.

FIG. 8 is a diagram showing a stress ratio according to the thickness change of the upper and lower plates and the side plates of the mono-frame according to an embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The embodiments disclosed herein are provided for more perfect explanation of the present disclosure, and thus the shape, size and the like of components may be exaggerated, omitted or simplified in the drawings for better understanding. Thus, the size and ratio of components in the drawings do not wholly reflect the actual size and ratio.

A mono-frame, which will be described below, is a component of a battery module to accommodate and protect battery cells. The mono-frame is assumed as having an integrated structure with a hollow rectangular tube form and having the same cross section. In addition, it is also assumed that the thickness of an upper plate of the mono-frame is equal to the thickness of a lower plate thereof, and the thickness of a left side plate thereof is equal to the thickness of a right side plate thereof.

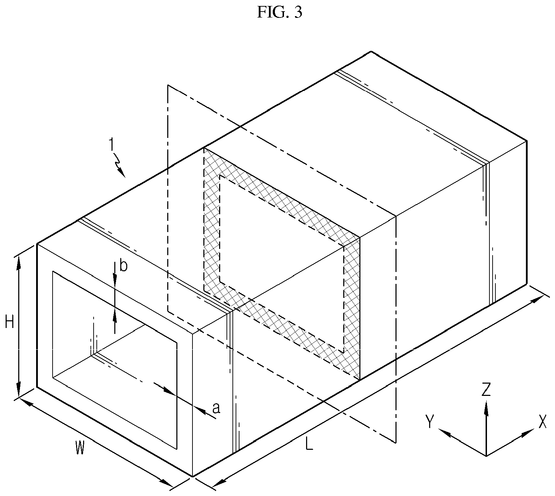

FIG. 2 is a block diagram showing a structural analysis tool for a mono-frame according to an embodiment of the present disclosure, and FIGS. 3 to 6 are reference views for illustrating a method for judging stability of the mono-frame by using the structural analysis tool for a mono-frame of FIG. 2.

As shown in FIG. 2, a structural analysis tool for a mono-frame according to the present disclosure may include an input unit 10 for inputting dimension and load information related to the mono-frame, a calculation unit 20 for receiving the information and calculating a structural stability evaluation target value, and an output unit 40 for judging the stability of the mono-frame based on the values calculated by the calculation unit 20.

The information of a reference mono-frame and the information of provisionally designed mono-frames required for the structural analysis are input to the input unit 10. Here, the reference mono-frame may refer to an existing mono-frame whose stability has been verified through analytical verification or actual experimental verification by means of the finite element analysis or the like, among mono-frames having a structure similar to the provisionally designed mono-frames. In addition, the provisionally designed mono-frame means a mono-frame designed at an initial battery module designing stage.

The information data for the reference mono-frame may include dimension (width, length, height, thickness of an upper plate, thickness of a side plate), weight, maximum stress value and the like. In addition, the information data for the provisionally designed mono-frame may include dimension (width, length, height, thickness of the upper plate, thickness of the side plate) and weight.

Meanwhile, result values of the reference mono-frame may be stored in a memory or the like in advance for various types. In this case, the structural analysis tool for a mono-frame may further include a base unit 30 that has a memory for storing various result values of the reference mono-frames.

If the information data of the reference mono-frame and the provisionally designed mono-frame are input from the input unit 10, the calculation unit 20 performs a process of calculating a stress ratio of the provisionally designed mono-frame to the reference mono-frame.

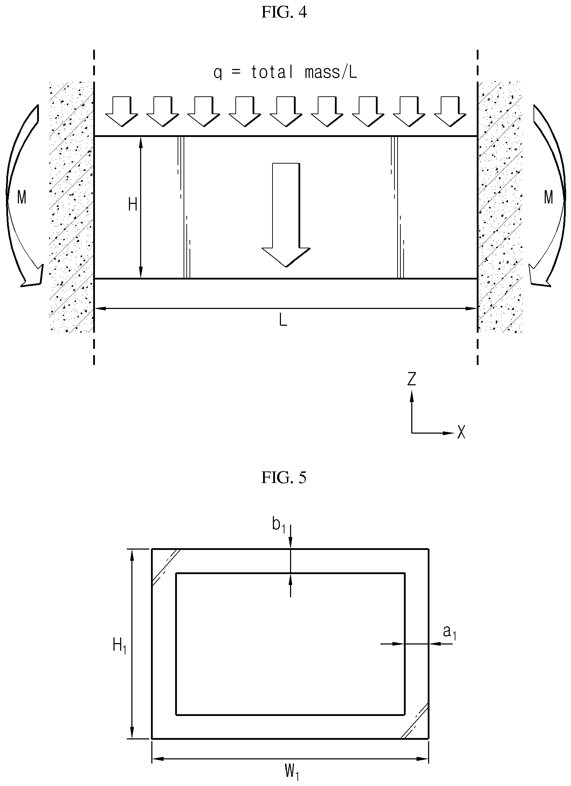

The stress ratio may be a structural stability evaluation target value of the provisionally designed mono-frame. Hereinafter, a method of calculating the stress ratio will be described with reference to FIGS. 3 and 4.

As shown in the figures, it is assumed that the mono-frame is a beam having a rectangular tube shape, and the beam theory is applied in a state where both ends of the mono-frame are fixed, thereby obtaining a maximum bending stress generated at the mono-frame.

At this time, the equation for deriving the maximum bending stress is as follows.

$$M = q*L^2/12$$

$$I = (1/12*W*H\text{^}3)-[1/12*(W-2a)*(H-2b)\text{^}3$$

$$\sigma = (M/I)*(H/2)$$

(M; bending moment, I; cross section secondary moment, σ; maximum bending stress, q; distributed load, W; width, L; length, H; height, a; thickness of the side plate, b; thickness of the upper plate)

According to the beam theory, it may be found that the maximum bending stress of the mono-frame is determined by the dimension (width W, length L, height H, thickness of the upper plate b, side plate thickness a) and load of the mono-frame.

Thus, the stress of the reference mono-frame and the stress of the provisionally designed mono-frame are obtained by applying the dimension and load of the reference mono-frame and the dimension and load of the provisionally designed mono-frame to the beam theory equation, and the stress ratio of the provisionally designed mono-frame to the mono-frame may be calculated therefrom.

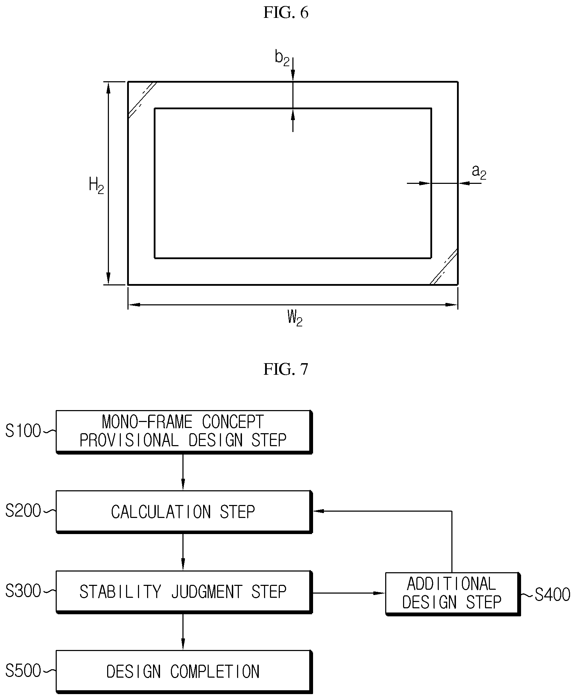

That is, if it is assumed that the cross section of the mono-frame shown in FIG. 5 is the cross section of the reference mono-frame and the cross section of the mono-frame shown in FIG. 6 is the cross section of the provisionally designed mono-frame, the stress value (x1) of the reference mono-frame and the stress value (x2) of the provisionally designed mono-frame according to the beam theory equation and their stress ratio (R) are as follows.

$$x1 = [q1*L1\text{^}2/12]/[(1/12*W1*H1\text{^}3)-[1/12*(W1-2a1)*(H1-2b1)\text{^}3]*(H1/2)$$

$$x2 = [q2*L2\text{^}2/12]/[(1/12*W2*H2\text{^}3)-[1/12*(W2-2a2)*(H2-2b2)\text{^}3]*(H2/2)$$

$$R = x2/x1$$

In addition, the stress ratio calculating equation used by the calculation unit 20 may be arranged as follows using the equation: the stress ratio R = x2/x1.

$$R = \frac{(q_2 L_2^2 H_2)[W_1 H_1^3 - (W_1 - 2\,a_1)(H_1 - 2\,b_1)^3]}{(q_1 L_1^2 H_1)[W_2 H_2^3 - (W_2 - 2\,a_2)(H_2 - 2\,b_2)^3]}$$

(R: a stress ratio, q1: a distributed load of the reference mono-frame, HI: a height of the reference mono-frame, L1: a length of the reference mono-frame, W1: a width of the reference mono-frame, a1: a thickness of a side plate of the reference mono-frame, b1: a thickness of an upper plate of the reference mono-frame, q2: a distributed load of the provisionally designed mono-frame, H2: a height of the provisionally designed mono-frame, L2: a length of the provisionally designed mono-frame, W2: a width of the provisionally designed mono-frame, a2: a thickness of a side plate of the provisionally designed mono-frame, b2: a thickness of an upper plate of the provisionally designed mono-frame)

Meanwhile, the stress value of the provisionally designed mono-frame may be estimated as a product of the stress value of the reference mono-frame (the stress value of the reference mono-frame analyzed in advance by means of the finite element analysis) and the stress ratio.

That is, the calculation unit 20 may perform a process of further calculating the stress value of the provisionally designed mono-frame by using the following equation.

$$\sigma_2 = \sigma_1 R$$

(σ1: a stress value of the reference mono-frame analyzed in advance by the finite element analysis, σ2: a stress value of the provisionally designed mono-frame, R: a stress ratio)

The stress value σ2 of the provisionally designed mono-frame is not a stress value simply obtained by the theoretical theory but a stress value prepared for the stress value of the reference mono-frame which has been accurately analyzed, and the stress value σ2 of the provisionally designed mono-frame may be used as a criterion for guessing the degree of stress level generated at a finished product later.

In addition, the calculation unit 20 may perform a process of further calculating a strain ratio or a strain of the provisionally designed mono-frame.

The strain means a geometrical deformation of an object, which is generated due to the stress, and the strain is proportional to the stress and inversely proportion to the Young's modulus E.

In other words, the following relation is established.

$$D \propto (q*L\char`^4)/(E*I)$$

(D; a strain of the mono-frame, q; a distributed load, L; a length, E; a Young's modulus of the mono-frame, I: a moment of inertia)

Thus, if this relation is applied to the reference mono-frame of FIG. 5 and the provisionally designed mono-frame of FIG. 6, their strain ratio DR may be obtained as follows.

$$DR = [(q2*L2\char`^4)/(E1*I1)]/[(q1*L1\char`^4)/(E2*I2)]$$

$$(\text{moment of inertia, } I = (1/12*W*H\char`^3)-[1/12*(W-2a)*(H-2b)\char`^3)$$

Thus, similar to the above where the stress value of the provisionally designed mono-frame is estimated as the product of the stress value the reference mono-frame and the stress ratio, the strain of the provisionally designed mono-frame may be estimated as the product of the strain of the reference mono-frame, which has been obtained through actual analysis, and the strain ratio.

Namely, the calculation unit 20 may calculate the strain of the provisionally designed mono-frame according to the following equation.

$$D_2 = D_1 \frac{(q_2 L_2^4)(E_1 I_1)}{(q_1 L_1^4)(E_2 I_2)}$$

(D1: a strain of the reference mono-frame analyzed in advance by the finite element analysis, D2: a strain of the provisionally designed mono-frame, E1: a Young's modulus of the reference mono-frame, E2: a Young's modulus of the provisionally designed mono-frame, I1: a moment of inertia of the reference mono-frame, I2: a moment of inertia of the provisionally designed mono-frame)

In this way, if the calculation result data including the stress ratio calculated by the calculation unit 20 are input to the output unit 40 of the present disclosure, the output unit 40 performs a process of comparing the stress ratio with a preset stress ratio reference value to judge whether or not to actually correct the design of the provisionally designed mono-frame.

As described above, the reference mono-frame is a mono-frame whose stability has been verified through the finite element analysis or the like, and becomes a criterion for judging the stability of the provisionally designed mono-frame. Thus, the preset stress ratio reference value is set to 1 unless there are special circumstances.

The output unit 40 is processed to output conformity judgment if the stress ratio calculated by the calculation unit 20 is equal to or smaller than the preset stress ratio reference value 1 and to output nonconformity judgment if the calculated stress ratio is greater than the stress ratio reference value 1. In other words, if the stress value of the provisionally designed mono-frame is equal to or smaller than the stress value of the reference mono-frame, it is considered that stability is secured, and if the stress value of the provisionally designed mono-frame is greater than the stress value of the reference mono-frame, it is considered that stability is not secured.

The structural analysis tool for a mono-frame according to the present disclosure may be implemented in the form of an information processing device such as a computer in which information is processed by software.

Hereinafter, a mono-frame designing method using the structural analysis tool for a mono-frame will be described.

FIG. 7 is a flowchart for illustrating processes of a mono-frame designing method according to an embodiment of the present disclosure.

Referring to FIG. 7, the mono-frame designing method according to the present disclosure includes a mono-frame concept provisional design step (S100) for designing dimension of a mono-frame, a calculation step (S200), and a stability judgment step (S300).

In the mono-frame concept provisional design step (S100), the dimension and weight of the mono-frame are determined. Referring to FIG. 3, the mono-frame includes seven kinds of dimensions in total, including a width (W), a length (L), a height (H), thicknesses (b) of the upper plate and the lower plate, and thicknesses (a) of the left side plate and the right side plate. Generally, the mono-frame is fabricated so that the upper plate and the lower plate have the same thickness and the left side plate and the right side plate have the same thickness. In the following description, it is assumed that the thickness of the upper plate is identical to the thickness of the lower plate, and the thickness of the left side plate is identical to the thickness of the right side plate. Thus, in analyzing the structure of the mono-frame according to the present disclosure, five dimensions of the mono-frame may be considered in total, unless otherwise specified.

Here, three dimensions corresponding to the width, length and height of the mono-frame may be determined in advance according to the battery module specification required by a customer. For example, the width, length and height of the mono-frame may be determined according to the structure of a vehicle or battery pack at which the battery module is to be installed. Alternatively, the width, length and height of the mono-frame may also be determined according to the size and capacity of the battery cells.

If the width, length and height of the mono-frame are determined, the thicknesses of the upper and lower plates and the side plates of the mono-frame are determined. For reference, if the mono-frame has a greater thickness, the stability becomes greater, but the battery cell accommodating space becomes narrower and the production cost increases. Thus, it is very important to select appropriate thicknesses of the mono-frame in designing, from the viewpoint of satisfying economic feasibility and stability simultaneously.

If the dimension and weight of the provisionally designed mono-frame are determined, the corresponding data are input to the input unit 10 of the structural analysis tool for a mono-frame as described above. At this time, the dimension, weight and stress value data of the reference mono-frame of a similar structure, which has been structurally analyzed in advance under the same impact condition, may be input together. If there are multiple provisionally designed mono-frames, the information about all of them may be input together.

For reference, unlike this embodiment, the information about the existing mono-frames analyzed by means of the finite element analysis may be stored in advance in a database of the structural analysis tool for a mono-frame. In this case, a user may select any one of the previously analyzed mono-frames and use it as the reference mono-frame.

In the calculation step (S200), the stress ratio of the reference mono-frame and the provisionally designed mono-frame is calculated by means of the beam theory, by using the dimension and weight of the reference mono-frame and the dimension and weight data of the provisionally designed mono-frame as parameters.

In the calculation step (S200), the stress value and strain of the provisionally designed mono-frame and the strain ratio of the provisionally designed mono-frame to the reference mono-frame may be further calculated together with the stress ratio. For example, the stress ratio, the stress value and strain of the provisionally designed mono-frame, and the strain ratio of the provisionally designed mono-frame to the reference mono-frame may be calculated by the calculation unit 20 of the structural analysis tool for a mono-frame as described above. The method of calculating a result value such as the stress ratio is already described above in relation to the calculation unit 20 of the structural analysis tool for a mono-frame and thus will not be described again.

In the stability judgment step (S300), the stress ratio calculated in the calculation step (S200) is calculated with the preset stress ratio reference value to judge whether or not to correct the design of the provisionally designed mono-frame.

Specifically, since the reference mono-frame is used as a criterion for judging stability, the provisionally designed mono-frame becomes relatively stable if the stress applied to the provisionally designed mono-frame is smaller than the stress applied to the reference mono-frame under the same impact condition.

Thus, the stress ratio reference value is set to 1 unless there is a special condition, and if the stress ratio of the provisionally designed mono-frame to the reference mono-frame is equal to or smaller than 1, the provisionally designed mono-frame is relatively stable, and thus the design may be judged to be conformable. Otherwise, if the stress ratio is greater than 1, the provisionally designed mono-frame is relatively unstable than the reference mono-frame, and thus the design may be judged to be non-conformable.

Table 1

| | width W (mm) | length L (mm) | height H (mm) | wall thickness a (mm) | thickness of upper and lower plates b (mm) | weight (kg) | stress (MPa) | stress ratio (R) | strain ratio (DR) | judgment |
|---|---|---|---|---|---|---|---|---|---|---|
| reference mono-frame | 200 | 400 | 100 | 6 | 3 | 50 | 100.0 | - | - | - |
| mono-frame A | 200 | 400 | 100 | 4 | 3 | 50 | 108.1 | 1.081 | 1.081 | non-conformable |
| mono-frame B | 200 | 400 | 100 | 4 | 4 | 50 | 86.8 | 0.868 | 0.848 | conformable |
| mono-frame C | 220 | 380 | 100 | 3 | 3 | 50 | 93.6 | 0.936 | 0.845 | conformable |
| mono-frame D | 300 | 500 | 150 | 5 | 5 | 70 | 108.2 | 1.082 | 1.69 | non-conformable |
| mono-frame E | 300 | 500 | 150 | 6 | 6 | 70 | 92.4 | 0.924 | 1.44 | conformable |

Table 1 shows the stability evaluation results according to the stress ratio calculated in the calculation step (S200) of the present disclosure for each of the five provisionally designed mono-frames. Referring to Table 1, it may be found that the mono-frame A and the mono-frame D have a stress ratio greater than 1, and the mono-frame B, the mono-frame C and the mono-frame E have a stress ratio smaller than 1.

In the stability judgment step (S300), the stability of at least the mono-frame B, the mono-frame C and the mono-frame E are verified, and it may be regarded that the concept of these mono-frames are approximately completed (S500).

Meanwhile, in the stability judgment step (S300), the mono-frame A and the mono-frame D, which have received stability nonconformity judgment, require dimension correction. Thus, referring to FIG. 7 again, the mono-frame designing method of the present disclosure may further include an additional setting step (S400) for selectively adjusting at least one of the dimensions of the provisionally designed mono-frame which have received stability nonconformity judgment in the stability judgment step (S300).

In the additional setting step (S400), at least one of the thicknesses of the upper and lower plates and the thicknesses of the side plates of the provisionally designed mono-frame may be adjusted to be thicker than before.

The width, length and height of the mono-frame are dimensions that determine the volume of the mono-frame, and thus it is difficult to change these dimensions. However, changing the thicknesses of the upper and lower plates and the side plates of the mono-frame does substantially not affect the volume of the mono-frame. Thus, it is desirable to complement the stability by firstly adjusting the thicknesses of the upper and lower plates and/or the thicknesses of the side plates of the provisionally designed mono-frame.

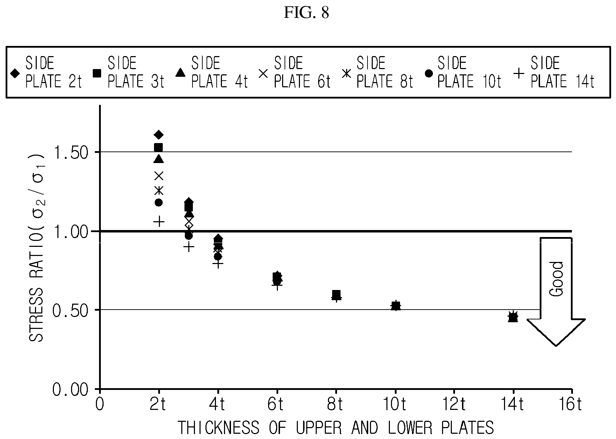

FIG. 8 is a diagram showing a stress ratio according to the thickness change of the upper and lower plates and the side plates of the mono-frame according to an embodiment of the present disclosure.

Referring to FIG. 8, the provisionally designed mono-frame has a stress level similar to that of the reference mono-frame when the thicknesses of the upper and lower plate are at least 3t, and it may be found that the stress tends to be lowered than that of the reference mono-frame if the thicknesses of the upper and lower plate are about 4t. In addition, as the thicknesses of the upper and lower plates are smaller, the difference in stress ratio according to the thicknesses of the side plates becomes greater. As may be deduced from the variation of the stress ratio according to the thickness of the mono-frame, the change in thickness of the upper and lower plates gives a greater influence on the stress ratio variation than the change in thickness of the side plates.

Thus, in order to lower the stress ratio while reducing the thickness of the mono-frame as small as possible in the additional setting step (S400), it may be desirable to firstly specify the thicknesses of the upper and lower plates, and then determine the thicknesses of the side plates.

Accordingly, if the modified dimension and weight data information of the provisionally designed mono-frame are determined in the additional setting step (S400), the calculation step (S200) and the stability judgment step (S300) may be performed again. If the stability of the additionally designed mono-frame is verified as conformity judgment in the stability judgment step (S300), it may be regarded that the concept of the mono-frame concept design is approximately completed (S500).

The present disclosure may significantly reduce the lead time required for checking the structural robustness of the mono-frame at the initial battery module designing stage and save the design costs by comparing the provisionally designed mono-frame with the reference mono-frame whose stability is verified in advance, to check the stability of the provisionally designed mono-frame relatively.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Claims**

1. A structural analysis tool for a mono-frame that is provided in a rectangular tube form as a structure for protecting battery cells, the structural analysis tool comprising:

   an input unit configured to input dimension, weight and stress value data of a reference mono-frame, which are structurally analyzed in advance, and dimension and weight data of a provisionally designed mono-frame;
   a calculation unit configured to calculate a stress ratio of the reference mono-frame and the provisionally designed mono-frame based on the beam theory by using the data of the reference mono-frame and the data of the provisionally designed mono-frame; and
   an output unit configured to judge stability of the provisionally designed mono-frame by comparing the stress ratio calculated by the calculation unit with a preset stress ratio reference value.

**2.** The structural analysis tool for a mono-frame according to claim 1,
wherein the preset stress ratio reference value is 1, and
wherein the output unit outputs stability conformity judgment when the stress ratio calculated by the calculation unit is equal to or smaller than the preset stress ratio reference value, and outputs stability nonconformity judgment when the stress ratio calculated by the calculation unit is greater than the preset stress ratio reference value.

**3.** The structural analysis tool for a mono-frame according to claim 1,
wherein the calculation unit calculates the stress ratio by using the following equation:

$$R = \frac{(q_2 L_2^2 H_2)[W_1 H_1^3 - (W_1 - 2\,a_1)(H_1 - 2\,b_1)^3]}{(q_1 L_1^2 H_1)[W_2 H_2^3 - (W_2 - 2\,a_2)(H_2 - 2\,b_2)^3]}$$

where R: a stress ratio, q1: a distributed load of the reference mono-frame, HI: a height of the reference mono-frame, L1: a length of the reference mono-frame, W1: a width of the reference mono-frame, a1: a thickness of a side plate of the reference mono-frame, b1: a thickness of an upper plate of the reference mono-frame, q2: a distributed load of the provisionally designed mono-frame, H2: a height of the provisionally designed mono-frame, L2: a length of the provisionally designed mono-frame, W2: a width of the provisionally designed mono-frame, a2: a thickness of a side plate of the provisionally designed mono-frame, b2: a thickness of an upper plate of the provisionally designed mono-frame.

**4.** The structural analysis tool for a mono-frame according to claim 3,
wherein the calculation unit further calculates a stress value of the provisionally designed mono-frame by using the following equation:

$$\sigma_2 = \sigma_1 R$$

where σ1: a stress value of the reference mono-frame analyzed in advance by the finite element analysis, σ2: a stress value of the provisionally designed mono-frame, R: a stress ratio.

**5.** The structural analysis tool for a mono-frame according to claim 3,
wherein the calculation unit further calculates a strain of the provisionally designed mono-frame by using the following equation:

$$D_2 = D_1 \frac{(q_2 L_2^4)(E_1 I_1)}{(q_1 L_1^4)(E_2 I_2)}$$

where D1: a strain of the reference mono-frame analyzed in advance by the finite element analysis, D2: a strain of the provisionally designed mono-frame, E1: a Young's modulus of the reference mono-frame, E2: a Young's modulus of the provisionally designed mono-frame, I1: a moment of inertia of the reference mono-frame, 12: a moment of inertia of the provisionally designed mono-frame.

**6.** A mono-frame designing method for designing a mono-frame that is provided in a rectangular tube form as a structure for protecting battery cells, the method comprising:

a mono-frame concept provisional design step of determining dimension and weight of a mono-frame;
a calculation step of calculate a stress ratio of a reference mono-frame and the provisionally designed mono-frame based on the beam theory by using dimension, weight and stress value data of the reference mono-frame, which are structurally analyzed in advance, and dimension and weight data of the provisionally designed mono-frame; and
a stability judgment step of judging stability of the provisionally designed mono-frame by comparing the stress ratio calculated in the calculation step with a preset stress ratio reference value.

**7.** The mono-frame designing method according to claim 6,

wherein the preset stress ratio reference value is 1, and

wherein in the stability judgment step, stability conformity judgment is made when the stress ratio calculated in the calculation step is equal to or smaller than the preset stress ratio reference value, and stability nonconformity judgment is made when the stress ratio calculated in the calculation step is greater than the preset stress ratio reference value.

8. The mono-frame designing method according to claim 7, further comprising:

an additional setting step of selectively adjusting at least one of the dimensions of the provisionally designed mono-frame when the stability nonconformity judgment is made in the stability judgment step, wherein the calculation step is performed again after the additional setting step.

9. The mono-frame designing method according to claim 8, wherein the additional setting step includes a dimension adjusting step in which at least one thickness among the thicknesses of the upper plate and the thicknesses of the side plate of the provisionally designed mono-frame is adjusted to be thicker than before.

10. The mono-frame designing method according to claim 6, wherein the stress ratio is calculated according to the following equation:

$$R = \frac{(q_2 L_2^2 H_2)[W_1 H_1^3 - (W_1 - 2\,a_1)(H_1 - 2\,b_1)^3]}{(q_1 L_1^2 H_1)[W_2 H_2^3 - (W_2 - 2\,a_2)(H_2 - 2\,b_2)^3]}$$

where R: a stress ratio, $q_1$: a distributed load of the reference mono-frame, HI: a height of the reference mono-frame, $L_1$: a length of the reference mono-frame, $W_1$: a width of the reference mono-frame, $a_1$: a thickness of a side plate of the reference mono-frame, $b_1$: a thickness of an upper plate of the reference mono-frame, $q_2$: a distributed load of the provisionally designed mono-frame, $H_2$: a height of the provisionally designed mono-frame, $L_2$: a length of the provisionally designed mono-frame, $W_2$: a width of the provisionally designed mono-frame, $a_2$: a thickness of a side plate of the provisionally designed mono-frame, $b_2$: a thickness of an upper plate of the provisionally designed mono-frame.

11. The mono-frame designing method according to claim 10, wherein in the calculation step, a stress value of the provisionally designed mono-frame is further calculated by using the stress ratio as in the following equation:

$$\sigma_2 = \sigma_1 R$$

where $\sigma_1$: a stress value of the reference mono-frame analyzed in advance by the finite element analysis, $\sigma_2$: a stress value of the provisionally designed mono-frame, R: a stress ratio.

12. The mono-frame designing method according to claim 10, wherein in the calculation step, a strain of the provisionally designed mono-frame is further calculated by using the following equation:

$$D_2 = D_1 \frac{(q_2 L_2^4)(E_1 I_1)}{(q_1 L_1^4)(E_2 I_2)}$$

where D1: a strain of the reference mono-frame analyzed in advance by the finite element analysis, D2: a strain of the provisionally designed mono-frame, E1: a Young's modulus of the reference mono-frame, E2: a Young's modulus of the provisionally designed mono-frame, I1: a moment of inertia of the reference mono-frame, 12: a moment of inertia of the provisionally designed mono-frame.

FIG. 1

FIG. 2

FIG. 3

FIG. 4

q = total mass/L

M

H

M

L

Z

X

FIG. 5

$b_1$

$H_1$

$a_1$

$W_1$

FIG. 6

FIG. 7

FIG. 8

## INTERNATIONAL SEARCH REPORT

| International application No. |
| --- |
| **PCT/KR2018/009120** |

**A.  CLASSIFICATION OF SUBJECT MATTER**

*G06F 17/50(2006.01)i, G06F 17/10(2006.01)i*

According to International Patent Classification (IPC) or to both national classification and IPC

**B.  FIELDS SEARCHED**

Minimum documentation searched (classification system followed by classification symbols)
G06F 17/50; G01R 31/28; G06F 19/00; G06F 9/44; H01M 2/02; G06F 17/10

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: battery, cell, mono frame, structural analysis, standard, stress ratio, calculation, size, data, input, provisional design, comparison, stability

**C.  DOCUMENTS CONSIDERED TO BE RELEVANT**

| Category* | Citation of document, with indication, where appropriate, of the relevant passages | Relevant to claim No. |
| --- | --- | --- |
| A | KR 10-1338770 B1 (HYUNDAI ENGINEERING & CONSTRUCTION CO., LTD.) 06 December 2013 See paragraphs [0017]-[0059]; claim 1; and figure 1. | 1-12 |
| A | KR 10-2017-0083834 A (LG CHEM, LTD.) 19 July 2017 See paragraphs [0014]-[0035]; claim 1; and figures 4-7. | 1-12 |
| A | KR 10-2012-0082112 A (KOREA AEROSPACE INDUSTRIES, LTD.) 23 July 2012 See paragraphs [0014]-[0033] and figures 1-2. | 1-12 |
| A | KR 10-2013-0061822 A (HANBAT NATIONAL UNIVERSITY INDUSTRY-ACADEMIC COOPERATION FOUNDATION) 12 June 2013 See paragraphs [0007]-[0016] and figure 1. | 1-12 |
| A | US 2007-0079190 A1 (HILLMAN, Craig Damon et al.) 05 April 2007 See paragraphs [0004]-[0007] and figure 3. | 1-12 |

☐ Further documents are listed in the continuation of Box C.     ☒  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 NOVEMBER 2018 (26.11.2018) | **26 NOVEMBER 2018 (26.11.2018)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/009120**

| Patent document cited in search report | Publication date | Patent family member | Publication date |
|---|---|---|---|
| KR 10-1338770 B1 | 06/12/2013 | NONE | |
| KR 10-2017-0083834 A | 19/07/2017 | NONE | |
| KR 10-2012-0082112 A | 23/07/2012 | KR 10-1200167 B1 | 13/11/2012 |
| KR 10-2013-0061822 A | 12/06/2013 | KR 10-1277179 B1 | 19/06/2013 |
| US 2007-0079190 A1 | 05/04/2007 | US 7689945 B2 | 30/03/2010 |

Form PCT/ISA/210 (patent family annex) (January 2015)

**REFERENCES CITED IN THE DESCRIPTION**

**Patent documents cited in the description**

- KR 1020170114602
- KR 1020170083834